# EUROPÄISCHE PATENTSCHRIFT

(11) **EP 1 868 761 B1**
(45) Veröffentlichungstag und Bekanntmachung des Hinweises auf die Patenterteilung: **28.09.2011**
(21) Anmeldenummer: 06708207.3
(22) Anmeldetag: 13.02.2006
(51) Int. Cl.: B23H 7/26

(54) **MECHANISCHE ELEKTRODENFÜHRUNG ZUR FUNKENEROSIVEN BEARBEITUNG**
MECHANICAL ELECTRODE GUIDE FOR USE IN ELECTRON DISCHARGE MACHINING
GUIDE-ELECTRODE MECANIQUE UTILISE A DES FINS D'USINAGE PAR ELECTRO-EROSION

(30) Priorität: 01.04.2005 DE 102005015105
(43) Veröffentlichungstag der Anmeldung: 26.12.2007
(73) Patentinhaber: ROBERT BOSCH GMBH, 70442 Stuttgart (DE)
(72) Erfinder: SCHOEPF, Martin, 70499 Stuttgart (DE); SCHAEFER, Bernd, 71636 Ludwigsburg (DE)
(86) Internationale Anmeldenummer: PCT/EP2006/050865
(87) Internationale Veröffentlichungsnummer: WO 2006/103139

(56) Entgegenhaltungen:
- US-A- 4 686 344
- US-A- 4 771 157
- US-A- 5 585 013
- PATENT ABSTRACTS OF JAPAN Bd. 2003, Nr. 12, 5. Dezember 2003 (2003-12-05) & JP 2004 017249 A (SODICK CO LTD), 22. Januar 2004 (2004-01-22)

## Beschreibung

### Stand der Technik

Die Erfindung betrifft eine Elektrodenführung für eine Elektrode zur funkenerosiven Bearbeitung eines Werkstückes nach dem Oberbegriff des Anspruchs 1. Eine solche Elekrodenführung ist in US 4686 344 A beschrieben.

Bei einer funkenerosiven Bearbeitung eines Werkstückes wird zwischen einer Elektrode und einem Werkstück eine elektrische Entladung verursacht. Das Werkstück wird dadurch in eine gewünschte Konfiguration "erodiert", d. h. geschmolzen oder geschnitten. Dabei kann das Werkstück relativ zur Elektrode - oder umgekehrt - bewegt werden. Die Elektrode weist typischerweise die Form eines Drahtes oder eines Stabes auf und wird daher auch Drahtelektrode genannt. Die Herstellung solcher Drahtelektroden wird beispielsweise in EP 0 850 716 B1 oder EP 1 106 293 B1 beschrieben.

Eine wichtige Anwendung der funkenerosiven Bearbeitung ist die Herstellung von Mikrobohrungen, beispielsweise für Kraftstoffeinspritzventile. Um eine Bohrung bzw. Aussparung mit einer möglichst geringen Toleranz zu erhalten, besteht Bedarf nach präziser Elektrodenführung, die eine kontrollierte Positionierung der Elektrode gewährleistet. Eine Elektrodenführung für Erodiermaschinen wird in der DE 101 03 292 A1 beschrieben. Es wird eine Elektrodenführung für eine Elektrode vorgeschlagen, die eine Prismenführung, bestehend aus einem Halteteil und einem Andrückteil, aufweist. Die Elektrode wird zwischen dem Andrückteil und dem Halteteil angeordnet und spielfrei geführt. Eine nutförmige Aussparung ist im Halteteil oder Andrückteil ausgebildet, so dass die nutförmige Aussparung die Elektrode teilweise aufnimmt. Daraus resultieren genau drei Kontaktstellen zwischen der Elektrodenführung und der Elektrode. Weiter wird das Andrückteil mittels einer Vorspanneinrichtung gegen das Halteteil gedrückt, um ein Spiel der Elektrode in der Führung zu verhindern.

Ein Nachteil der oben beschriebenen Vorrichtung besteht darin, dass das Halte- oder Andrückteil eine Aussparung aufweisen muss, um die Elektrode spielfrei mit drei Kontaktstellen mit der Elektrodenführung führen zu können. Neben dem größeren technischen Aufwand, ein Führungselement mit einer exakten Aussparung zu realisieren als ein Führungselement ohne eine Aussparung, besteht auch die Abnutzungsgefahr, dass sich die Form der Aussparung durch die Krafteinwirkung während des Betriebes mit der Zeit verändert. Daraus entsteht eine Notwendigkeit zu einer größeren Sorgfalt bei der Wartung. Zusätzlich ist eine unsymmetrische Kräfteverteilung zwischen der Elektrode und den beiden Führungselementen zu erwarten, da die Elektrode durch zwei Führungselementen, aber drei Kontaktstellen geführt wird.

Es ist daher Aufgabe der vorliegenden Erfindung, eine Erodiermaschine bzw. eine Elektrodenführung zur funkenerosiven Bearbeitung bereitzustellen, welche eine spielfreie Elektrodenführung mit drei Kontaktstellen zwischen der Elektrode und der Elektrodenführung gewährleistet, ohne dass die Führungselemente eine Aussparung aufweisen müssen.

### Vorteile der Erfindung

Die erfindungsgemäße Erodiermaschine bzw. Elektrodenführung hat den Vorteil, dass die Elektrodenführung die Elektrode sicher mit drei Kontaktstellen ohne die oben beschriebenen Nachteile spielfrei führt. Insbesondere können auf Aussparungen in den Führungselementen verzichtet werden. Weiter wird eine symmetrische Krafteinwirkung auf die Elektrode durch die Elektrodenführung gewährleistet.

Es ist weiter vorteilhaft, dass die erfindungsgemäße Erodiermaschine bzw. Elektrodenführung genügend Raum für die Kühlung der Elektrode bietet. Auch ist die Elektrodenführung unempfindlich gegenüber Abtragspartikeln aus dem Erodierprozess, die sonst zu Verstopfungen und damit zum Stillstand des Erodierprozesses führen können.

Im übrigen bietet die Elektrodenführung die Möglichkeit, das gewünschte Führungsspiel zwischen Elektrode und Führungselementen auf eine einfache Weise zu bestimmen bzw. einzustellen.

Sehr vorteilhaft ist es auch, dass die einzelnen, sehr präzise hergestellten Komponenten der Elektrodenführung kostengünstig am Markt angeboten werden.

Vorteilhafte Weiterbildungen der Erodiermaschine bzw. Elektrodenführung sind in den Unteransprüchen angegeben und in der Beschreibung beschrieben.

### Zeichnung

Ausführungsbeispiele der Erfindung werden anhand der Zeichnung und der nachfolgenden Beschreibung näher erläutert. Es zeigen:
Figur 1 eine Erodiermaschine mit einer Elektrodenführung,
Figuren 2a und 2b eine nicht erfindungsgemäße Elektrodenführung aus drei kugelförmigen Führungselementen im Schnitt und in Draufsicht,
Figur 2c eine erfindungsgemäße Elektrodenführung aus drei kugelförmigen, angeschliffenen Führungselementen im Schnitt,
Figuren 3a und 3b eine nicht erfindungsgemäße Ausführung der Elektrodenführung aus drei zylinderförmigen Führungselementen im Schnitt und in Draufsicht, und
Figuren 4a, 4b und 4c eine weitere Ausführung der Elektrodenführung in Draufsicht und in unterschiedlichen Schnittrichtungen.

### Beschreibung der Ausführungsbeispiele

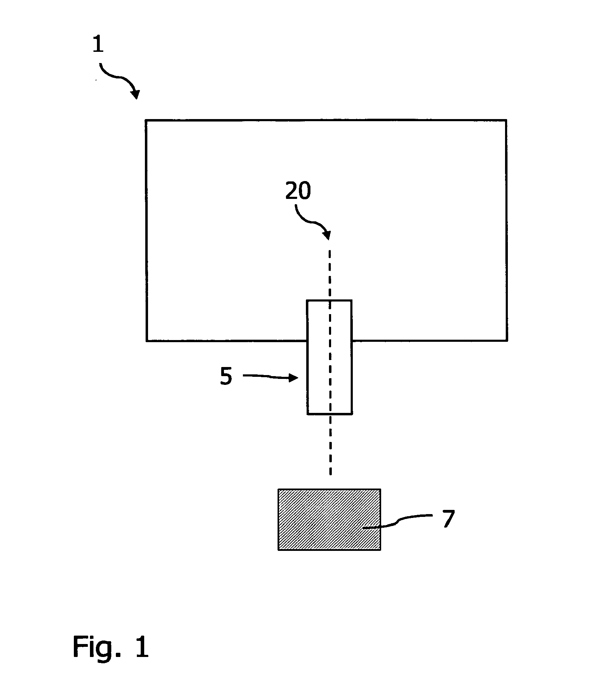

In Figur 1 ist eine Erodiermaschine 1 mit einem zu bearbeitenden Werkstück 7 dargestellt. Die Erodiermaschine 1 weist eine Elektrodenführung 5 auf, mit der eine in Fig. 1 nicht dargestellte Elektrode 10 geführt werden kann. Mit der Bezugsziffer 20 ist die zentrale Längsachse der Elektrodenführung 5 gekennzeichnet. Auf eine detaillierte zeichnerische Darstellung weiterer Bestandteile der Erodiermaschine 1 wurde aus Gründen der Übersichtlichkeit verzichtet.

Die Elektrodenführung 5 basiert auf einer mechanischen Führung, wobei die einzelnen Elemente der Elektrodenführung 5 hochpräzise Standardkomponenten sind, die vorteilhafterweise sehr kostengünstig am Markt verfügbar sind.

Es wird vorgeschlagen, für eine präzise Führung einer Elektrode drei Führungselemente vorzusehen, die rotationssymmetrisch um die Elektrode angeordnet sind. Eine rotationssymmetrische Anordnung ist dann gegeben, wenn die Anordnung um einen Drehpunkt oder Drehachse gedreht werden kann, ohne dabei die ursprüngliche Form zu ändern. Die Form der Anordnung ist also vor und nach einer Drehung deckungsgleich. Da insgesamt drei Führungselemente vorgesehen sind, kann die Anordnung der Führungselemente rotationssymmetrisch um die Elektrode 10 bzw. um die Längsachse 20 der Elektrodenführung 5 mit einem Winkel von 120° bzw. einem Vielfachen davon gedreht werden. Es sei bemerkt, dass das Merkmal einer rotationssymmetrischen Anordnung nicht zwingend fordert, dass die Anordnung tatsächlich drehbar gelagert ist. Vielmehr wird mit dem Merkmal ausgesagt, was für eine Form aus einer gedanklichen Drehung der Anordnung resultieren würde. Es ist im übrigen vorteilhaft, wenn alle drei Führungselemente die gleiche geometrische Form aufweisen.

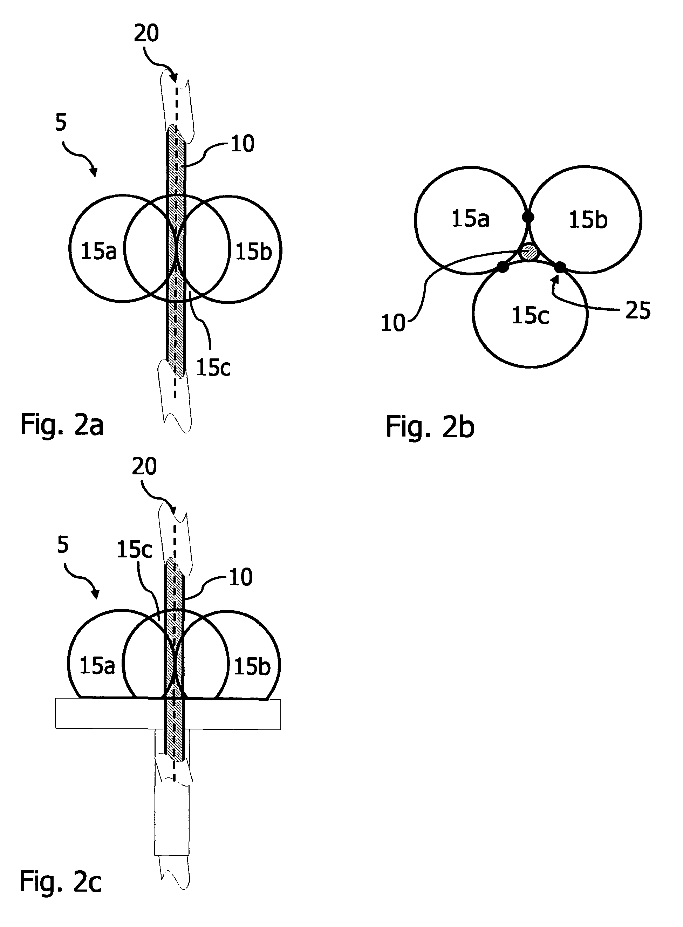

In den Figuren 2a und 2b ist eine Elektrodenführung 5 im Schnitt bzw. in Draufsicht dargestellt. Die drei Führungselemente 15a, 15b, 15c weisen hier die Form einer Kugel auf und sind symmetrisch um eine Elektrode 10 angeordnet, so dass sie sich gegenseitig an Berührungsstellen 25 berühren. Jedes Führungselement 15a, 15b, 15c weist also jeweils eine Berührungsstelle 25 mit den anderen beiden Führungselementen 15b, 15c, 15a auf. In Figur 2b sind die drei Berührungsstellen 25 jeweils mit einem dicken Punkt markiert worden, wobei aus Gründen der Übersichtlichkeit nur eine Berührungsstelle mit der Bezugsziffer 25 gekennzeichnet wurde. Durch diese Anordnung der Führungselemente 15a, 15b, 15c entsteht in der Mitte der Elektrodenführung 5 ein in der Größe und Form definierter Raum, in dem die Elektrode 10 aufgenommen werden kann. Die Elektrode 10 kontaktiert jedes der drei Führungselemente 15a, 15b, 15c genau an einer definierten Stelle, so dass insgesamt auch drei Berührungsstellen der Elektrode 10 und der Elektrodenführung 5 gebildet werden, an denen die Elektrode 10 exakt geführt werden kann. In diesem Zusammenhang kann man von einer Drei-Punkt-Führung sprechen. Die kugelförmigen Führungselemente 15a, 15b, 15c können übrigens aus einem keramischen Material bestehen und sind am unteren, d. h. dem Werkstück 7 zugewandten Ende angeschliffen, wie in Fig. 2c dargestellt. So kann der Abstand zwischen der Elektrodenführung 5 und dem Werkstück 7 minimiert werden.

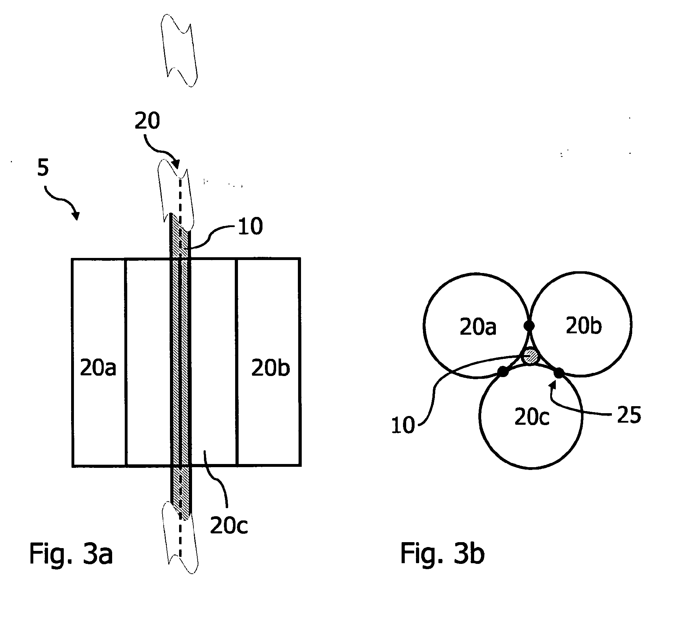

Eine weitere Elektrodenführung 5 im Schnitt bzw. in Draufsicht zeigen die Fig. 3a und 3b. Hier weisen die Führungselemente 20a, 20b, 20c die Form eines Zylinders auf. Als Material ist hierfür Keramik, beispielsweise ZrO₂, geeignet. Bei gleicher Anordnung der Führungselemente 20a, 20b, 20c wie im Falle der kugelförmigen Führungselemente 15a, 15b, 15c bilden nun die Berührungsstellen sowohl der Führungselemente 20a, 20b, 20c untereinander als auch die Berührungsstellen der Elektrode 10 und der Elektrodenführung 5 keine punktuellen, sondern linienhafte Berührungen. Es liegt also eine Drei-Linien-Führung vor. Die zylindrischen Führungselemente 20a, 20b, 20c können aus zylindrischen Nadeln bestehen.

In beiden Elektrodenführugen ergibt sich im übrigen genügend Raum für die Kühlung der Elektrode 5 durch das Dielektrikum. Auch sind beide Ausführungen unempfindlich gegenüber Abtragspartikeln aus einem Erodierprozess, die im Falle von beispielsweise konventionellen Rundführungen zu Verstopfungen und damit zum Stillstand des Erodierprozesses führen können.

Wichtig ist auch die Möglichkeit, durch gezielte Wahl des Kugel- oder Zylinderdurchmessers sehr einfach das gewünschte Führungsspiel zwischen der Elektrode 10 und Führungselementen 15a, 15b, 15c bzw. 20a, 20b, 20c bestimmen zu können. Die Flexibilität der Elektrodenführung 5 ergibt sich also durch einen einfachen Wechsel der Führungselemente 15a, 15b, 15c bzw. 20a, 20b, 20c.

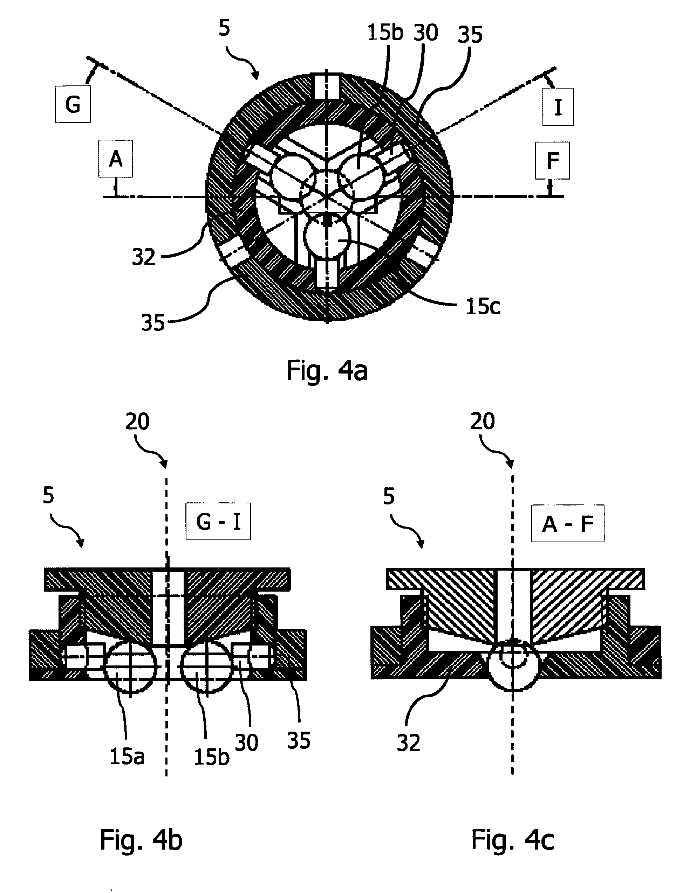

Ein weiteres nicht erfindungsgemäßes Ausführungsbeispiel zeigen die Fig. 4a, 4b und 4c. Während in Fig. 4a die Elektrodenführung 5 in Draufsicht dargestellt ist, zeigen die Fig. 4b und 4c die Elektrodenführung 5 in Schnittrichtungen G-I bzw. A-F, wobei die Schnittrichtungen G-I bzw. A-F in Fig. 4a eingezeichnet sind. Wie im ersten Ausführungsbeispiel weist die Elektrodenführung 5 kugelförmige Führungselemente 15a, 15b, 15c auf, die symmetrisch um die zentrale Längsache 20 der Elektrodenführung 5 bzw. um die Elektrode 10 angeordnet sind. Zusätzlich sind nun Einstellstifte 30 vorgesehen, die zwischen den kugelförmigen Elektrodenführung 5 und einem Außenring 35 angeordnet sind. Jedem Führungselement 15a, 15b, 15c ist ein Einstellstift 30 zugeordnet. Die Einstellstifte 30 gibt es in verschiedenen Längen. Die Führungselemente 15a, 15b, 15c werden über ein Gewinde in einen Halterring 32 gedrückt und somit entsprechend der Länge der Einstellstifte 30 positioniert und gehalten. Die Flexibilität, d. h. die Anpassung der Elektrodenführung 5 an das gewünschte Führungsspiel zwischen der Elektrode 10 und den Führungselementen 15a, 15b, 15c ergibt sich hier nicht durch einen Wechsel des Durchmessers der kugelförmigen Führungselemente 15a, 15b, 15c, sondern durch Variation der Länge der Einstellstifte 30.

## Patentansprüche

1. Elektrodenführung (5) für eine Elektrode (10) zur funkenerosiven Bearbeitung eines Werkstückes (7), wobei drei Führungselemente (15a, 15b, 15c; 20a, 20b, 20c) für eine präzise Führung der Elektrode (10) vorgesehen sind, die rotationssymmetrisch um die Elektrode (10) angeordnet sind, und die Führungselemente (15a, 15b, 15c; 20a, 20b, 20c) die Form einer Kugel (15a, 15b, 15c) aufweisen **dadurch gekennzeichnet, dass** die kugelförmigen Führungselemente (15a, 15b, 15c) am dem Werkstück (7) zugewandten Ende angeschliffen sind.

2. Elektrodenführung (5) nach Anspruch 1, **dadurch gekennzeichnet, dass** die drei Führungselemente (15a, 15b, 15c; 20a, 20b, 20c) die gleiche geometrische Form aufweisen.

3. Elektrodenführung (5) nach Anspruch 1 oder 2, **dadurch gekennzeichnet, dass** jedes Führungselement (15a, 15b, 15c; 20a, 20b, 20c) mit den anderen beiden Führungselementen (15b, 15c, 15a; 20b, 20c, 20a) jeweils eine Berührungsstelle (25) aufweist.

4. Elektrodenführung (5) nach Anspruch 1, **dadurch gekennzeichnet, dass** die kugelförmigen Führungselemente (15a, 15b, 15c) aus Keramik bestehen.

5. Elektrodenführung (5) nach Anspruch 4, **dadurch gekennzeichnet, dass** jedem kugelförmigen Führungselement (15a, 15b, 15c) ein Einstellstift 30 zugeordnet ist.

6. Elektrodenführung (5) nach Anspruch 5, **dadurch gekennzeichnet, dass** die Einstellstifte (30) zwischen den kugelförmigen Führungselementen (15a, 15b, 15c) und einem Außenring (35) angeordnet sind.

7. Erodiermaschine (1) zur erosiven Bearbeitung eines Werkstückes (7) mit einer Elektrodenführung (5) nach einem der Ansprüche 1 bis 6.

## Claims

1. Electrode guide (5) for an electrode (10) for the electrical discharge machining of a workpiece (7), wherein three guide elements (15a, 15b, 15c; 20a, 20b, 20c) arranged rotationally symmetrically around the electrode (10) are provided for precisely guiding the electrode (10), and the guide elements (15a, 15b, 15c; 20a, 20b, 20c) have the form of a sphere (15a, 15b, 15c), **characterized in that** the spherical guide elements (15a, 15b, 15c) are ground down at the end facing the workpiece (7).

2. Electrode guide (5) according to Claim 1, **characterized in that** the three guide elements (15a, 15b, 15c; 20a, 20b, 20c) have the same geometrical form.

3. Electrode guide (5) according to Claim 1 or 2, **characterized in that** each guide element (15a, 15b, 15c; 20a, 20b, 20c) has a point of contact (25) with each of the other two guide elements (15b, 15c, 15a; 20b, 20c, 20a).

4. Electrode guide (5) according to Claim 1, **characterized in that** the spherical guide elements (15a, 15b, 15c) consist of ceramic.

5. Electrode guide (5) according to Claim 4, **characterized in that** each spherical guide element (15a, 15b, 15c) is assigned an adjusting pin (30).

6. Electrode guide (5) according to Claim 5, **characterized in that** the adjusting pins (30) are arranged between the spherical guide elements (15a, 15b, 15c) and an outer ring (35).

7. EDM machine (1) for the electrical discharge machining of a workpiece (7) with an electrode guide (5) according to one of Claims 1 to 6.

## Revendications

1. Guide d'électrode (5) pour une électrode (10) pour l'usinage par électro-érosion d'une pièce (7), trois éléments de guidage (15a, 15b, 15c ; 20a, 20b, 20c) étant prévus pour un guidage précis de l'électrode (10), lesquels sont disposés avec une symétrie de révolution autour de l'électrode (10), et les éléments de guidage (15a, 15b, 15c ; 20a, 20b, 20c) présentant la forme d'une bille guidage (15a, 15b, 15c), **caractérisé en ce que** les éléments de guidage (15a, 15b, 15c) en forme de bille sont meulés au niveau de l'extrémité tournée vers la pièce (7).

2. Guide d'électrode (5) selon la revendication 1, **caractérisé en ce que** les trois éléments de guidage (15a, 15b, 15c ; 20a, 20b, 20c) présentent la même forme géométrique.

3. Guide d'électrode (5) selon la revendication 1 ou 2, **caractérisé en ce que** chaque élément de guidage (15a, 15b, 15c ; 20a, 20b, 20c) présente à chaque fois un point de contact (25) avec les deux autres éléments de guidage (15b, 15c, 15a ; 20b, 20c, 20a).

4. Guide d'électrode (5) selon la revendication 1, **caractérisé en ce que** les éléments de guidage (15a, 15b, 15c) en forme de bille se composent de céramique.

5. Guide d'électrode (5) selon la revendication 4, **caractérisé en ce qu'**une goupille d'ajustement (30) est associée à chaque élément de guidage (15a, 15b, 15c) en forme de bille.

6. Guide d'électrode (5) selon la revendication 5, **caractérisé en ce que** les goupilles d'ajustement (30) sont disposées entre les éléments de guidage (15a, 15b, 15c) en forme de bille et une bague extérieure (35).

7. Machine d'érosion (1) pour l'usinage par érosion d'une pièce (7), comprenant un guide d'électrode (5) selon l'une quelconque des revendications 1 à 6.
